# EUROPEAN PATENT SPECIFICATION

(11) **EP 3 770 931 B1**
(45) Date of publication and mention of the grant of the patent: **18.12.2024**
(21) Application number: 20187171.2
(22) Date of filing: 22.07.2020
(51) Int. Cl.: H01F 27/36, H01F 27/28

(54) **TRANSFORMER APPARATUS**
TRANSFORMATORVORRICHTUNG
APPAREIL DE TRANSFORMATEUR

(30) Priority: 23.07.2019 US 201962877687 P
(43) Date of publication of application: 27.01.2021
(73) Proprietor: Solaredge Technologies Ltd., 4673335 Herzeliya (IL)
(72) Inventor: TAL, Nikolay, 4673335 Herzeliya (IL); GLOVINSKI, Tzachi, 4673335 Herzeliya (IL)
(74) Representative: V.O.

(56) References cited:
- EP-A1- 2 784 791
- EP-A1- 2 833 378
- WO-A1-2008/095660
- WO-A2-2014/086948
- CN-A- 109 300 576
- US-A- 3 436 704

## Description

### BACKGROUND

A transformer is an electronic device that includes at least two sets of windings, sometimes known as primary and secondary sets of windings. A transformer provides galvanic isolation between the first and second sets of windings. In some cases, where the number of windings in the first set of windings is different from the number of windings in the second set of windings, the transformer provides voltage conversion. It is desirable to reduce an electric field present between the two sets of windings in order to reduce electric stress experienced by an insulating medium insulating the windings. It is also desirable to reduce a quantity of encapsulation material used to facilitate effective cooling of the transformer.

US 3 436 704 A relates to an electrical inductive apparatus comprising first, second and third winding structures disposed in spaced, adjacent, concentric relation, respectively; wherein first and second solid insulating means are disposed between said first and second winding structures, and between said second and third winding structures, respectively; said first and second solid insulating means having inner and outer major surfaces which have an electrically conductive or semiconductive means disposed thereon; wherein means are provided for electrically connecting the electrically conductive means on said inner and outer major surfaces to the winding structure immediately adjacent thereto.

CN 109 300 576 A relates to a voltage transformer and a manufacturing method thereof, wherein a main insulation device includes a main insulating resin cylinder and a semi-conductive paint layer; the main insulating resin cylinder has a cylindrical shape; the inner surface and the outer surface of the main insulating resin cylinder are semi-conductive paint layers.

WO 2008/095660 A1 relates to an insulation arrangement for potential isolation between a high voltage winding and a low voltage winding of a transformer, said insulation arrangement has a layered structure, comprising inner insulation between the high voltage winding and the low voltage winding, which are adjoined by at least one semiconductive layer.

### SUMMARY

The present invention relates to an apparatus as defined in independent claim 1 and to a method of manufacturing such an apparatus as defined in claim 15.

The following summary presents a simplified summary of certain features. The summary is not an extensive overview and is not intended to identify key or critical elements.

Systems, apparatuses, and methods are described for a transformer that includes at least two sets of windings, and at least two semiconductive shields configured and disposed to cause a first electrical field between the two semiconductive shields, a second electrical field between a first of the semiconductive shields and a first set of windings, and a third electrical field between a second of the semiconductive shields and a second set of windings. According to features of the disclosure herein, the second and third electrical fields may be smaller than the first electrical field. Enhancing the first electrical field with respect to the second and third electrical fields may enable disposing the sets of windings using reduced insulation, and may increase cooling efficiency of transformer elements.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows a transformer in accordance with the disclosure herein.
FIG. 2 shows additional details of a transformer in accordance with the disclosure herein.
FIG. 3 shows additional details of a transformer in accordance with the disclosure herein.
FIG. 4 shows additional details of a transformer in accordance with the disclosure herein, according to a profile view, and including electric field indications.

### DETAILED DESCRIPTION

The accompanying drawings, which form a part hereof, show examples of the disclosure. It is to be understood that the examples shown in the drawings and/or discussed herein are non-exclusive and that there are other examples of how the disclosure may be practiced.

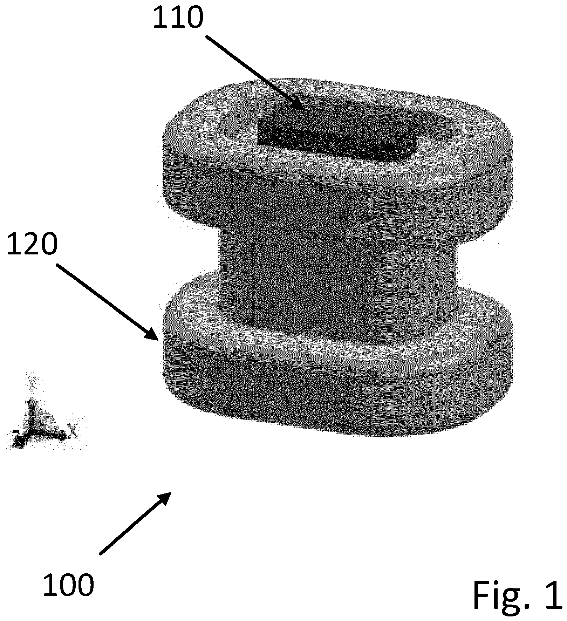

Reference is now made to Fig. 1, which shows a transformer 100 as described herein below. The transformer 100 comprises core 110, and is encompassed by case 120. Case 120 may be made of, for example, resin, and may be disposed to protect internal components of transformer 100 (e.g., from dust, humidity, etc.) and, as shown in Fig. 1, may obstruct an external view of the additional internal components, that are shown and discussed in further detail below. Core 110 may be made of ferromagnetic material or ferromagnetic compound, and may be designed to cause magnetic flux induced by windings of transformer 100 (not depicted in Fig. 1) to flow primarily through core 110.

Transformer 100 may be placed in a grounded conducting case, or casing (e.g, a box, not depicted) or a grounded conducting frame, to increase safety and reduce electrical field leakage from transformer 100.

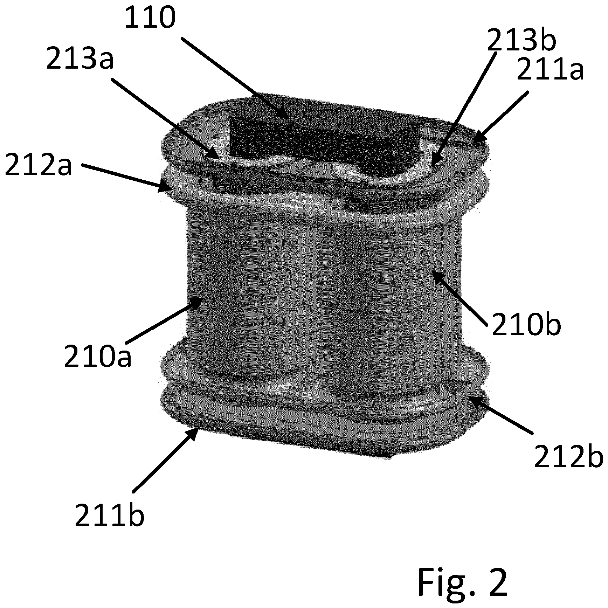

Reference is now made to Fig. 2, which shows additional elements of transformer 100 that are obscured by case 120 as depicted in Fig. 1. In addition to core 110, transformer 100 comprises first windings 210a and 210b, first inner shield lid 211a, second inner shield lid 211b, first outer shield lid 212a, second outer shield lid 212b, first bobbin 213a and second bobbin 213b. Transformer 100 may include additional components that are concealed in Fig. 2 by first windings 210a and 210b, and will be described below.

In the illustrative design shown in Fig. 2, core 110 is of rectangular shape, having two legs, and two shorter members connecting parallel legs to form a full magnetic path. According to some features, core 110 may also include an air gap. First windings 210a and 210b are each wound around one of the parallel legs.

Windings 210a and 210b are shown each having a single winding of conductive material, the conductive material substantially filling the entire space between first outer shield lid 212a and second outer shield lid 212b. According to features of the disclosure herein, each of windings 210a and 210b may comprise more than one winding (e.g., several, tens, hundreds of thousands of windings), and may fill the entire space or part of the space between first outer shield lid 212a and second outer shield lid 212b. Windings 210a and 210b may be formed using single-strand wire, or multi-strand wire (e.g., Litz wire). Winding 210a may be wound around a first leg of core 110 (with intermediate elements disposed between winding 210a and the first leg of core 110, as described herein), and winding 210b may be wound around a second leg of core 110 (with intermediate elements disposed between winding 210b and the second leg of core 110, as described herein).

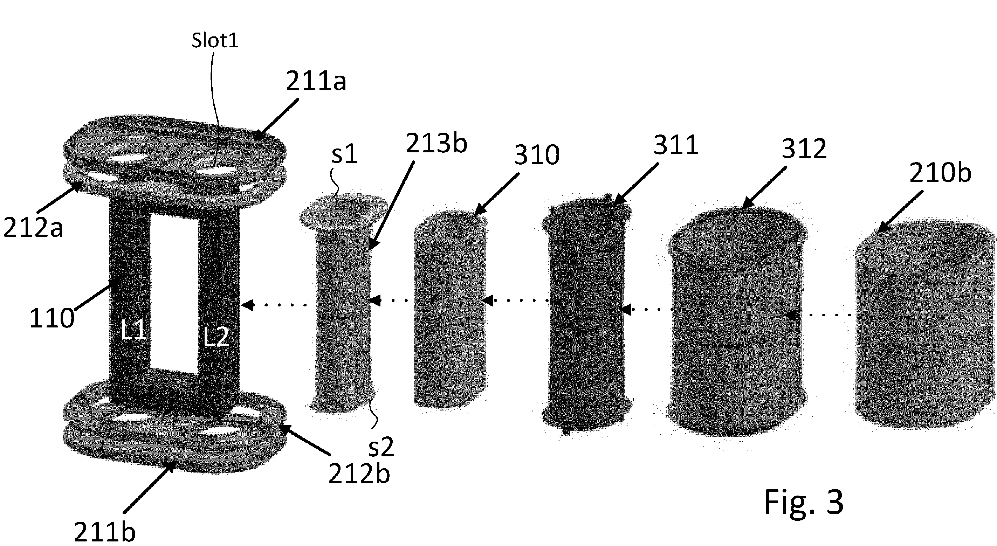

Each of first windings 210a and 210b may feature two or more terminals or taps (not explicitly depicted) for connecting to voltage terminals external to the transformer. For example, first winding 210a and first winding 210b may each have two voltage terminals, and may each be connected to a varying [e.g., an alternating current (AC)] voltage having an amplitude of several volts, tens of volts, hundreds of volts or thousands of volts. First windings 210a and 210b may be magnetically coupled to one another via core 110, and may also be magnetically coupled to secondary windings (depicted herein in Fig. 3).

First inner shield lid 211a and second inner shield lid 211b may be formed using semiconductive material, for example, semiconductive plastic, isolating plastic with a semiconductive coating, or other semiconductive materials. First inner shield lid 211a and second inner shield lid 211b may be connected to one another by first and second inner shield legs (not shown in Fig. 2) to form an inner semiconductive shield having two semiconductive shield legs encompassing the first and second legs of core 110. Similarly, first outer shield lid 212a and second outer shield lid 212b may be connected to one another by first and second outer shield legs (not shown in Fig. 2) to form an outer semiconductive shield having two semiconductive shield legs encompassing the first and second legs of core 110. The inner semiconductive shield may be manufactured (e.g., cast) as a single component (e.g., a single mold may be used for manufacturing the inner semiconductive shield, the mold forming the shapes of first inner shield lid 211a, second inner shield lid 211b, and the first and second inner shield legs), or may be formed combining separately-manufactured elements [e.g., first inner shield lid 211a and second inner shield lid 211b may be manufactured (e.g., cast) separately, and may be connected, during construction of transformer 100, to the first and second inner shield legs]. Similarly, the outer semiconductive shield may be manufactured (e.g., cast) as a single component or may be formed combining separately-manufactured elements. The inner and outer shields may be shaped to form Rogowski profiles, or other profiles designed to increase uniformity in an electrical field between the inner and outer shields and to suppress field enhancement at the shield edges.

Fig. 2 also shows surfaces of first inner bobbin 213a and second inner bobbin 213b. First inner bobbin 213a and second inner bobbin 213b may encompass the first and second legs of core 110, respectively, and may be provided to support mounting of windings (not depicted in Fig. 2) magnetically coupled to (and galvanically isolated from) windings 210a and 210b. According to features of the disclosure herein, first inner bobbin 213a and second inner bobbin 213b might not be used, and additional windings may be disposed directly around the first and second legs of core 110.

Reference is now made to Fig. 3, which depicts an "exploded" view of various elements of transformer 100. For simplicity and brevity, elements encompassing second leg L2 of core 110 are depicted. It is understood that optionally, similar or identical elements may encompass first leg L1 of core 110, in accordance with Fig. 2. Dotted lines terminated by arrows indicate order of layering: an arrow pointing at a first element, with a dotted line extending from the arrow to a second element, indicates that the second element may be disposed around (e.g., may partially or completely encompass) the first element.

Inner bobbin 213b may encompass second leg L2. A first surface s1 of inner bobbin 213b may fit around a first corresponding slot *slot1* of first inner shield lid 211a (as shown in Fig. 2), and a second surface s2 of inner bobbin 213b may fit through a corresponding slot (not depicted in Fig. 3) of second inner shield lid 211b.

Windings 310 may be wound around inner bobbin 213b. According to another implementation of transformer 100 of the disclosure herein, inner bobbin 213b might not be used, and instead, windings 310 may be wound directly around second leg L2. Windings 310 may be constructed similarly to or the same as windings 210a and 210b, but may feature a different number of windings compared to windings 210a and 210b. Windings 310 may feature two or more voltage taps (e.g., voltage terminals) to be connected to voltage terminals of a power circuit (e.g., a full-bridge of transistors or diodes, or a different type of power electronics circuit). Shield leg 311 may be disposed around (e.g., may encompass) windings 310. Shield leg 311 may be attached to (e.g., manufactured together with, or later connected to) first shield lid 211a and second inner shield lids 211b, for forming an inner shield disposed around (e.g., encompassing) windings 310, and "shielding" windings 310 from strong electrical fields. The inner shield (e.g., one of first inner shield lid 211a and second inner shield lid 211b, and/or shield leg 311) may be connected to a first voltage tap of windings 310, and may be referenced to the same electrical potential as the first voltage tap of windings 310.

Shield leg 312 may be disposed around (e.g., may encompass) shield leg 311. Shield leg 312 may be attached to (e.g., manufactured together with, or later connected to) first and second outer shield lids 212a and 212b, for forming an outer shield disposed around (e.g., encompassing) shield leg 311. Insulating material (not explicitly depicted) may be injected between shield leg 311 and shield leg 312, between inner shield lid 211a and outer shield lid 212a, and between inner shield lid 211b and outer shield lid 212b. Shield leg 312, and outer shield lids 212a and 212b may be made of semiconductive material the same as or similar to shield lid 311, and inner shield lids 211a and 211b.

Windings 210b may be wound around shield leg 312. Windings 210b may feature two or more voltage taps (e.g., voltage terminals), with a first one of the voltage taps electrically connected to the outer shield (e.g., one of first and second outer shield lids 212a, 212b and/or shield leg 312) and referencing the outer shield to the same electrical potential as the first one of the voltage taps of windings 210b.

Windings 210b may be referenced (e.g., by direct electrical connection) to a first electrical potential, and windings 310 may be referenced to a second electrical potential that is different from the first electrical potential. For example, windings 310 may be referenced to ground, and windings 210b may be referenced (e.g., electrically connected) to a potential that is 100V, 1000V, 10kV, 20kV, 50kV, 100kV, or even higher. Windings 310 may be referenced to a varying potential reference point. For example, windings 310 may be referenced voltage reference point varying (e.g., sinusoidally or as a square-wave) between, for example, -1kV and +1kV, -10kV and +10kV, -20kV and +20kV, -100kV and +100kV, or a varying (e.g., sinusoidal) potential having an amplitude above 100kV or even above 1MV.

As a result of windings 210b and 310 being referenced to different potential levels, a voltage drop may exist between windings 210b and 310. In accordance with the numerical examples above, the voltage drop may be large - for example, tens, hundreds or thousands of kilovolts. By electrically connecting windings 210b to the outer shield and electrically connecting windings 310 to the inner shield, the voltage drop may exist between the inner shield and the outer shield. By designing the inner shield to be disposed around (e.g., encompass) the inner windings and by designing the outer shield to be disposed around (e.g., encompass) the inner shield, windings 210b and windings 310 may be "shielded" and separated from one another by the shields. This may enable reducing the insulation around the wires used for the windings to a rating that may be far less than the potential difference between windings 210b and windings 310. For example, windings 210b may have a voltage drop of up to 1000V between two taps on windings 210b. Similarly, windings 310 may have a voltage drop of up to 1000V between two taps on windings 310. Windings 210b may be referenced to 20kV, and windings 310 may be referenced to ground (0V). Without shielding, insulation of wires used for windings 310 and 210b would be rated to withstand over 20kV. Using inner and outer shields, as disclosed herein, may enable reducing the wire insulation to 100V, and disposing insulating material rated to withstand 20kV between the inner shield and the outer shield, which may provide cost savings and/or may enable more efficient cooling of transformer elements such as core 110, windings 210b and windings 310b, as the transformer elements are not covered by large quantities of insulating material.

Insulating material between the inner and outer shields may be the same as the material used for manufacturing case 120, and may be injected during the formation of case 120. For example, a mold having the shape of case 120 may be placed around the elements of transformer 100 as depicted in Fig. 2, and insulating material (e.g. resin epoxy, silicon, polyurethane) may be injected into the mold, both creating case 120 and filling in a gap between the inner and outer shields. The injection may be, for example, vacuum potting, automatic pressure gelation, or other suitable methods of injection.

Bobbin 213b, windings 310, shield leg 311, shield leg 312 and windings 310b have been described with respect to leg L2 of core 110. Similar or identical elements (e.g., windings 210a of Fig. 2, corresponding to windings 210b; or bobbin 213a of Fig. 2, corresponding to bobbin 213b) may be disposed around leg L1 of core 110, to increase efficient use of core 110. For brevity, those elements have not been shown explicitly with respect to Fig. 3, but they are included in the scope of the disclosure herein.

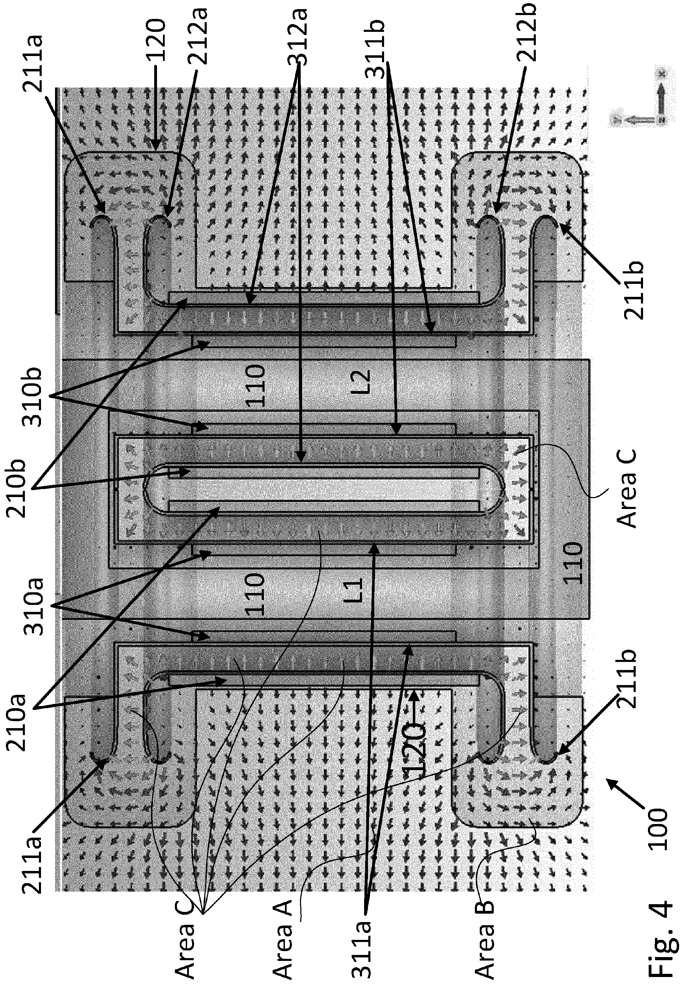

Reference is now made to Fig. 4, which shows an X-Y cross-section of transformer 100, according to the X-Y-Z axes of Fig. 1, in accordance with the disclosure herein. For increased clarity, some reference numbers are shown more than once and indicate different parts of a single element that, due to the cross-section view, does not appear to be contiguous. Arrows indicating electrical field directions and magnitudes as obtained from an electrical simulation are also shown. Dark arrows indicate a weak field, and arrows having a lighter color indicate a stronger field. Windings 310b correspond to windings 310 of Fig. 3, disposed over leg L2 of core 110. Windings 310a are similar to windings 310b, and are disposed over leg L1 of core 110. Shield leg 311b corresponds to shield leg 311 of Fig. 3, disposed over leg L2 of core 110; and shield leg 311a corresponds to another shield leg similar to shield leg 311 of Fig. 3, disposed over leg L1 of core 110. Shield leg 312b corresponds to shield leg 312 of Fig. 3, disposed over leg L2 of core 110; and shield leg 312a corresponds to another shield leg similar to shield leg 312 of Fig. 3, disposed over leg L1 of core 110.

The simulation included connecting a first square wave voltage generator producing a square wave varying between -700V and +700V to two terminals of windings 210a (in the simulation, there are no additional voltage taps), a second square wave voltage generator substantially in-phase with the first square wave voltage generators, and producing a square wave varying between -700V and +700V to two terminals of windings 210b. Windings 310 have 20% more turns than windings 210a and 210b, resulting in a square wave varying between -840V and +840V across windings 310a and across windings 310b. Windings 210a and 210b are referenced (in this example, directly connected to a potential of about 0V), and windings 310a and 310b are referenced to a voltage of about 10kV. The simulation included placing transformer 100 in a grounded, conducting case (e.g., a box) having conducting sides spaced approximately 60mm from the outer edges of transformer 100.

Area A as depicted in Fig. 4 refers to the space outside of transformer 100 (i.e., outside case 120). Area B is the area within casing 120 that is not between the semiconductive shields. Area C is the area between the semiconductive shields (e.g., between a shield leg 311 and shield leg 312, or between a shield lid 211a and shield lid 212a, or between a shield lid 211b and shield lid 212b. As shown by the field arrows, in area A, the electric field is of small magnitude, and flows outwards from transformer case 120 towards the conductive casing used in the simulation. In area B, the field is also weak, and flows in a somewhat "curved" (due to an "edge effect" present at edges of charged plates) direction from shield lid 212a to shield lid 211a, and from shield lid 212b to shield lid 211b. In area C, between the two shields, the electric field is strong (as indicated by light-colored arrows), and "flows" from the inner shield (formed by shield lids 211a and 211b, and shield legs 311a and 311b) to the outer shield (formed by shield lids 212a and 212b, and shield legs 312a and 312b.

Although examples are described above, features and/or steps of those examples may be combined, divided, omitted, rearranged, revised, and/or augmented in any desired manner. Various alterations, modifications, and improvements will readily occur to those skilled in the art. For example, legs L1 and L2 of core 110 may have round or oval cross-sections, rather than a rectangular cross-section; and shield legs 311 and 312 may have round or rectangular cross sections instead of an oval cross-section. As another example, core 110 may include a third leg, and each leg may feature more than two sets of windings and/or more than two shields. Such alterations, modifications, and improvements are intended to be part of this description, though not expressly stated herein, and are intended to be within the scope of the invention as defined in the appended claims. Accordingly, the foregoing description is by way of example only, and is not limiting.

## Claims

1. An apparatus comprising:
a transformer (100) comprising:
a core (110) comprising at least a first core leg (L1),
first windings (310a) disposed around the first core leg,
a first inner semiconductive shield manufactured as a single component or formed combining separately-manufactured elements (211a, 211b, 311a, 311b), said first inner semiconductive shield comprising
a first semiconductive shield leg (311a) disposed around the first windings, wherein the first semiconductive shield leg (311a) is formed using semiconductive material and is electrically connected to the first windings,
a second outer semiconductive shield manufactured as a single component or formed combining separately-manufactured elements (212a, 212b, 312a, 312b), said second outer semiconductive shield comprising
a second semiconductive shield leg (312a) disposed around the first semiconductive shield leg (311a), wherein the second semiconductive shield leg (312a) is formed using semiconductive material and
second windings (210a) disposed around the second semiconductive shield leg, wherein the second semiconductive shield leg is electrically connected to the second windings,
wherein the first inner semiconductive shield comprising the first semiconductive shield leg (311a) and second outer semiconductive shield comprising the first semiconductive shield leg (312a) are configured and disposed to form an area (C) there between in which a first electrical field is formed.

2. The apparatus of claim 1, further comprising a first bobbin (213a) disposed around the first core leg (L1), wherein the first windings (310a) are wound around the first bobbin.

3. The apparatus of claims 1 or 2, wherein the first windings (310a) comprise at least two voltage taps, and a first voltage tap of the first windings is electrically connected to the first inner semiconductive shield.

4. The apparatus of any of claims 1-3, wherein the second windings (210a) comprise at least two voltage taps, and a first voltage tap of the second windings is electrically connected to the second outer semiconductive shield.

5. The apparatus of claims 1 or 2, wherein the first windings (310a) comprise at least two voltage taps, wherein a first voltage tap of the first windings is electrically connected to the first inner semiconductive shield,
the second windings (210a) comprise at least two voltage taps, wherein a first voltage tap of the second windings is electrically connected to the second outer semiconductive shield,
wherein the first voltage tap of the first windings is connected to a first reference electrical potential, and the first voltage tap of the second windings is connected to a second reference electrical potential.

6. The apparatus of claim 5, wherein a voltage difference between the first reference electrical potential and the second reference electrical potential is above 100V.

7. The apparatus of claims 5 or 6, wherein a voltage difference between the first reference electrical potential and the second reference electrical potential varies sinusoidally, preferably according to a sine wave having an amplitude of 10kV or higher.

8. The apparatus of claim 5, wherein the first reference electrical potential is electrical ground.

9. The apparatus of claim 5, wherein the second reference electrical potential is electrical ground.

10. The apparatus of any preceding claim, wherein the core comprises a second core leg (L2), the transformer further comprising:
third windings (310b) disposed around the second core leg (L2),
the first inner semiconductive shield comprising
a third semiconductive shield leg disposed around the third windings,
the second outer semiconductive shield comprising
a fourth semiconductive shield leg disposed around the third semiconductive shield leg,
fourth windings (210b) disposed around the fourth semiconductive shield leg.

11. The apparatus of claim 10, wherein the first windings (310a) and the third windings (310b) are connected to a first electrical potential, and the second windings (201a) and the fourth windings (210b) are connected to a second electrical potential.

12. The apparatus of any preceding claim, further comprising a conductive case, wherein the transformer (100) is placed in the conductive case.

13. The apparatus of claim 12, wherein the conductive case is grounded.

14. The apparatus of any preceding claim, further comprising insulating material disposed between the first semiconductive shield leg and the second semiconductive shield leg.

15. A method comprising:
winding a first winding (310a) around a first leg (L1) of a magnetic core (110),
disposing a first cylindrical semiconductive shield leg (311a) of a first semiconductive shield around the first winding, wherein the first cylindrical semiconductive shield leg (311a) is formed using semiconductive material, wherein the first semiconductive shield is formed as a single component or formed combining separately-manufactured elements,
disposing a second cylindrical semiconductive shield leg (312a) of a second semiconductive shield around the first shield leg (311a), wherein the second cylindrical semiconductive shield leg (312a) is formed using semiconductive material, wherein the second semiconductive shield is formed as a single component or formed combining separately-manufactured elements,
disposing a second winding (210a) around the second cylindrical semiconductive shield leg (312a),
electrically connecting the first winding (310a) to the first cylindrical semiconductive shield leg (311a), and
electrically connecting the second winding (210a) to the second cylindrical semiconductive shield leg (312a),
wherein the first cylindrical semiconductive shield leg (311a) and the second cylindrical semiconductive shield leg (312a) are configured and disposed to form an area (C) there between in which a first electrical field is formed.

## Patentansprüche

1. Vorrichtung, aufweisend:
einen Transformator (100), aufweisend:
einen Kern (110), der mindestens einen ersten Kernschenkel (L1) aufweist,
erste Wicklungen (310a), die um den ersten Kernschenkel herum angeordnet sind,
eine erste innere Halbleiterabschirmung, die als eine einzige Komponente hergestellt ist oder so ausgebildet ist, dass in ihr getrennt hergestellte Elemente (211a, 211b, 311a, 311b) kombiniert sind, wobei die erste innere Halbleiterabschirmung aufweist:
einen ersten Halbleiterabschirmungs-Schenkel (311a), der um die ersten Wicklungen herum angeordnet ist, wobei der erste Halbleiterabschirmungs-Schenkel (311a) unter der Verwendung eines Halbleitermaterials ausgebildet ist und mit den ersten Wicklungen elektrisch verbunden ist,
eine zweite äußere Halbleiterabschirmung, die als eine einzige Komponente hergestellt ist oder so ausgebildet ist, dass in ihr getrennt hergestellte Elemente (212a, 212b, 312a, 312b) kombiniert sind, wobei die zweite äußere Halbleiterabschirmung aufweist:
einen zweiten Halbleiterabschirmungs-Schenkel (312a), der um den ersten Halbleiterabschirmungs-Schenkel (311a) herum angeordnet ist, wobei der zweite Halbleiterabschirmungs-Schenkel (312a) unter der Verwendung eines Halbleitermaterials ausgebildet ist, und
zweite Wicklungen (210a), die um den zweiten
Halbleiterabschirmungs-Schenkel angeordnet sind, wobei der zweite Halbleiterabschirmungs-Schenkel mit den zweiten Wicklungen elektrisch verbunden ist,
wobei die erste innere Halbleiterabschirmung, die den ersten Halbleiterabschirmungs-Schenkel (311a) aufweist, und die zweite äußere Halbleiterabschirmung, die den zweiten Halbleiterabschirmungs-Schenkel (312a) aufweist, so konfiguriert und angeordnet sind, dass sie einen Bereich (C) zwischen sich ausbilden, in dem ein erstes elektrisches Feld ausgebildet wird.

2. Vorrichtung gemäß Anspruch 1, ferner aufweisend einen ersten Wickelkörper (213a), die um den ersten Kernschenkel (L1) herum angeordnet ist, wobei die ersten Wicklungen (310a) um den ersten Wickelkörper herum gewickelt sind.

3. Vorrichtung gemäß einem der Ansprüche 1 oder 2, wobei die ersten Wicklungen (310a) mindestens zwei Spannungsabgriffe aufweisen und ein erster Spannungsabgriff der ersten Wicklungen mit der ersten inneren Halbleiterabschirmung elektrisch verbunden ist.

4. Vorrichtung gemäß einem der Ansprüche 1 bis 3, wobei die zweiten Wicklungen (210a) mindestens zwei Spannungsabgriffe aufweisen, und ein erster Spannungsabgriff der zweiten Wicklungen mit der zweiten äußeren Halbleiterabschirmung elektrisch verbunden ist.

5. Vorrichtung gemäß einem der Ansprüche 1 oder 2, wobei die ersten Wicklungen (310a) mindestens zwei Spannungsabgriffe aufweisen, wobei ein erster Spannungsabgriff der ersten Wicklungen mit der ersten inneren Halbleiterabschirmung elektrisch verbunden ist,
die zweiten Wicklungen (210a) mindestens zwei Spannungsabgriffe aufweisen, wobei ein erster Spannungsabgriff der zweiten Wicklungen mit der zweiten äußeren Halbleiterabschirmung elektrisch verbunden ist,
wobei der erste Spannungsabgriff der ersten Wicklungen mit einem ersten elektrischen Referenzpotential verbunden ist und der erste Spannungsabgriff der zweiten Wicklungen mit einem zweiten elektrischen Referenzpotential verbunden ist.

6. Vorrichtung gemäß Anspruch 5, wobei eine Spannungsdifferenz zwischen dem ersten elektrischen Referenzpotential und dem zweiten elektrischen Referenzpotential über 100 V beträgt.

7. Vorrichtung gemäß Anspruch 5 oder 6, wobei eine Spannungsdifferenz zwischen dem ersten elektrischen Referenzpotential und dem zweiten elektrischen Referenzpotential sinusförmig variiert, vorzugsweise gemäß einer Sinuswelle, die eine Amplitude von 10 kV oder mehr hat.

8. Vorrichtung gemäß Anspruch 5, wobei der erste elektrische Referenzpotential eine elektrische Erdung ist.

9. Vorrichtung gemäß Anspruch 5, wobei das zweite elektrische Referenzpotential eine elektrische Erdung ist.

10. Vorrichtung gemäß einem der vorhergehenden Ansprüche, wobei der Kern einen zweiten Kernschenkel (L2) aufweist, wobei der Transformator ferner aufweist:
dritte Wicklungen (310b), die um den zweiten Kernschenkel (L2) herum angeordnet sind,
wobei die erste innere Halbleiterabschirmung aufweist:
einen dritten Halbleiterabschirmungs-Schenkel, der um die dritten Wicklungen herum angeordnet ist,
wobei die zweite äußere Halbleiterabschirmung aufweist:
einen vierten Halbleiterabschirmungs-Schenkel, der um den dritten Halbleiterabschirmungs-Schenkel herum angeordnet ist,
vierte Wicklungen (210b), die um den vierten Halbleiterabschirmungs-Schenkel herum angeordnet sind.

11. Vorrichtung gemäß Anspruch 10, wobei die ersten Wicklungen (310a) und die dritten Wicklungen (310b) mit einem ersten elektrischen Potential verbunden sind und die zweiten Wicklungen (210a) und die vierten Wicklungen (210b) mit einem zweiten elektrischen Potential verbunden sind.

12. Vorrichtung gemäß einem der vorhergehenden Ansprüche, ferner aufweisend ein leitfähiges Gehäuse, wobei der Transformator (100) in dem leitfähigen Gehäuse untergebracht ist.

13. Vorrichtung gemäß Anspruch 12, wobei das leitfähige Gehäuse geerdet ist.

14. Vorrichtung gemäß einem der vorhergehenden Ansprüche, ferner aufweisend ein isolierendes Material, das zwischen dem ersten Halbleiterabschirmungs-Schenkel und dem zweiten Halbleiterabschirmungs-Schenkel angeordnet ist.

15. Verfahren, aufweisend:
Wickeln einer ersten Wicklung (310a) um einen ersten Schenkel (L1) eines Magnetkerns (110),
Anordnen eines ersten zylindrischen Halbleiterabschirmungs-Schenkels (311a) einer ersten Halbleiterabschirmung um die erste Wicklung, wobei der erste zylindrische Halbleiterabschirmungs-Schenkel (311a) unter der Verwendung eines Halbleitermaterials ausgebildet ist, wobei die erste Halbleiterabschirmung als eine einzige Komponente hergestellt ist oder so ausgebildet ist, dass in ihr getrennt hergestellte Elemente kombiniert sind,
Anordnen eines zweiten Halbleiterabschirmungs-Schenkels (312a) einer zweiten Halbleiterabschirmung um den ersten Abschirmungs-Schenkel (311a), wobei der zweite zylindrische Halbleiterabschirmungs-Schenkel (312a) unter der Verwendung eines Halbleitermaterials ausgebildet ist, wobei die zweite Halbleiterabschirmung als eine einzige Komponente hergestellt ist oder so ausgebildet ist, dass in ihr getrennt hergestellte Elemente kombiniert sind,
Anordnen einer zweiten Wicklung (210a) um den zweiten zylindrischen Halbleiterabschirmungs-Schenkel (312a) herum,
elektrisches Verbinden der ersten Wicklung (310a) mit dem ersten zylindrischen Halbleiterabschirmungs-Schenkel (311a), und
elektrisches Verbinden der zweiten Wicklung (210a) mit dem zweiten zylindrischen Halbleiterabschirmungs-Schenkel (312a),
wobei der erste zylindrische Halbleiterabschirmungs-Schenkel (311a) und der zweite zylindrische Halbleiterabschirmungs-Schenkel (312a) so konfiguriert und angeordnet sind, dass sie einen Bereich (C) zwischen sich ausbilden, in dem ein erstes elektrisches Feld ausgebildet wird.

## Revendications

1. Appareil comprenant :
un transformateur (100) comprenant :
un noyau (110) comprenant au moins une première branche de noyau (L1),
des premiers enroulements (310a) disposés autour de la première branche de noyau,
un premier blindage semi-conducteur interne fabriqué en tant que composant unique ou formé en combinant des éléments fabriqués séparément (211a, 211b, 311a, 311b), ledit premier blindage semi-conducteur interne comprenant
une première branche de blindage semi-conducteur (311a) disposée autour des premiers enroulements, la première branche de blindage semi-conducteur (311a) étant formée à l'aide d'un matériau semi-conducteur et étant connectée électriquement aux premiers enroulements,
un second blindage semi-conducteur externe fabriqué en tant que composant unique ou formé en combinant des éléments fabriqués séparément (212a, 212b, 312a, 312b), ledit second blindage semi-conducteur externe comprenant
une seconde branche de blindage semi-conducteur (312a) disposée autour de la première branche de blindage semi-conducteur (311a), la seconde branche de blindage semi-conducteur (312a) est formée à l'aide d'un matériau semi-conducteur et
de seconds enroulements (210a) disposés autour de la seconde branche de blindage semi-conducteur, la seconde branche de blindage semi-conducteur étant électriquement connectée aux seconds enroulements,
le premier blindage semi-conducteur interne comprenant la première branche de blindage semi-conducteur (311a) et le second blindage semi-conducteur externe comprenant la première branche de blindage semi-conducteur (312a) étant configurés et disposés pour former une zone (C) entre eux dans laquelle un premier champ électrique est formé.

2. Appareil selon la revendication 1, comprenant en outre une première bobine (213a) disposée autour de la première branche de noyau (L1), les premiers enroulements (310a) étant enroulés autour de la première bobine.

3. Appareil selon les revendications 1 ou 2, dans lequel les premiers enroulements (310a) comprennent au moins deux prises de tension, et une première prise de tension des premiers enroulements est connectée électriquement au premier blindage semi-conducteur interne.

4. Appareil selon l'une quelconque des revendications 1 à 3, dans lequel les seconds enroulements (210a) comprennent au moins deux prises de tension, et une première prise de tension des seconds enroulements est connectée électriquement au second blindage semi-conducteur externe.

5. Appareil selon la revendication 1 ou 2, dans lequel les premiers enroulements (310a) comprennent au moins deux prises de tension, une première prise de tension des premiers enroulements étant connectée électriquement au premier blindage semi-conducteur interne,
les seconds enroulements (210a) comprennent au moins deux prises de tension, une première prise de tension des seconds enroulements étant connectée électriquement au second blindage semi-conducteur externe,
la première prise de tension des premiers enroulements étant connectée à un premier potentiel électrique de référence, et la première prise de tension des seconds enroulements étant connectée à un second potentiel électrique de référence.

6. Appareil selon la revendication 5, dans lequel une différence de tension entre le premier potentiel électrique de référence et le second potentiel électrique de référence est supérieure à 100 V.

7. Appareil selon la revendication 5 ou 6, dans lequel une différence de tension entre le premier potentiel électrique de référence et le second potentiel électrique de référence varie de manière sinusoïdale, de préférence selon une onde sinusoïdale ayant une amplitude de 10 kV ou plus.

8. Appareil selon la revendication 5, dans lequel le premier potentiel électrique de référence est la masse électrique.

9. Appareil selon la revendication 5, dans lequel le second potentiel électrique de référence est la masse électrique.

10. Appareil selon l'une quelconque des revendications précédentes, dans lequel le noyau comprend une seconde branche de noyau (L2), le transformateur comprenant en outre :
des troisièmes enroulements (310b) disposés autour de la seconde branche de noyau (L2),
le premier blindage semi-conducteur interne comprenant
une troisième branche de blindage semi-conducteur disposée autour des troisièmes enroulements,
le second blindage semi-conducteur externe comprenant
une quatrième branche de blindage semi-conducteur disposée autour de la troisième branche de blindage semi-conducteur,
des quatrièmes enroulements (210b) disposés autour de la quatrième branche de blindage semi-conducteur.

11. Appareil selon la revendication 10, dans lequel les premiers enroulements (310a) et les troisièmes enroulements (310b) sont connectés à un premier potentiel électrique, et les seconds enroulements (201a) et les quatrièmes enroulements (210b) sont connectés à un second potentiel électrique.

12. Appareil selon l'une quelconque des revendications précédentes, comprenant en outre un boîtier conducteur, dans lequel le transformateur (100) est placé dans le boîtier conducteur.

13. Appareil selon la revendication 12, dans lequel le boîtier conducteur est mis à la terre.

14. Appareil selon l'une quelconque des revendications précédentes, comprenant en outre un matériau isolant disposé entre la première branche de blindage semi-conductrice et la seconde branche de blindage semi-conductrice.

15. Procédé comprenant :
l'enroulement d'un premier enroulement (310a) autour d'une première branche (L1) d'un noyau magnétique (110),
la disposition d'une première branche de blindage semi-conducteur cylindrique (311a) d'un premier blindage semi-conducteur autour du premier enroulement, la première branche de blindage semi-conducteur cylindrique (311a) étant formée à l'aide d'un matériau semi-conducteur, le premier blindage semi-conducteur étant formé en tant que composant unique ou formé en combinant des éléments fabriqués séparément,
la disposition d'une seconde branche de blindage semi-conducteur cylindrique (312a) d'un second blindage semi-conducteur autour de la première branche de blindage (311a), la seconde branche de blindage semi-conducteur cylindrique (312a) étant formée à l'aide d'un matériau semi-conducteur, le second blindage semi-conducteur étant formé en tant que composant unique ou formé en combinant des éléments fabriqués séparément,
la disposition d'un second enroulement (210a) autour de la seconde branche de blindage semi-conducteur cylindrique (312a),
la connexion électrique du premier enroulement (310a) à la première branche de blindage semi-conducteur cylindrique (311a), et l'étape consistant à
connecter électriquement le second enroulement (210a) à la seconde branche de blindage semi-conductrice cylindrique (312a),
dans lequel la première branche de blindage semi-conductrice cylindrique (311a) et la seconde branche de blindage semi-conductrice cylindrique (312a) sont configurées et disposées pour former une zone (C) entre elles dans laquelle un premier champ électrique est formé.
